# FASCICULE DE BREVET EUROPEEN

(11) **EP 3 612 340 B1**
(45) Date de publication et mention de la délivrance du brevet: **20.10.2021**
(21) Numéro de dépôt: 18715046.1
(22) Date de dépôt: 10.04.2018
(51) Int. Cl.: B23K 11/31, B23K 26/00, B23K 26/352, B60C 13/00, B29D 30/06, B23K 101/20

(54) **PROCEDE DE GRAVURE AU LASER D'UN ELEMENT DE MOULE POUR MOULE DE PNEUMATIQUE**
VERFAHREN ZUM LASERGRAVIEREN EINES FORMELEMENTS FÜR EINE REIFENFORM
METHOD OF LASER ENGRAVING A MOULD ELEMENT FOR A TYRE MOULD

(30) Priorité: 20.04.2017 FR 1753417
(43) Date de publication de la demande: 26.02.2020
(73) Titulaire: Compagnie Générale des Etablissements Michelin, 63000 Clermont-Ferrand (FR)
(72) Inventeur: DESVIGNES, Jean-Claude, 63040 Clermont-Ferrand Cedex 09 (FR); MUHLHOFF, Olivier, 63040 Clermont-Ferrand Cedex 09 (FR)
(74) Mandataire: Noel, Luminita
(86) Numéro de dépôt international: PCT/EP2018/059177
(87) Numéro de publication internationale: WO 2018/192803

(56) Documents cités:
- EP-A1- 3 130 485
- WO-A1-2016/067854
- DE-A1-102007 005 455
- US-A1- 2002 043 522
- US-A1- 2006 278 613
- US-A1- 2012 227 879

## Description

La présente invention concerne les domaines des pneumatiques pour véhicules.

Plus particulièrement, l'invention concerne un procédé de gravure au laser d'un élément de moule conformément au préambule de la revendication 1 (voir par exemple EP 3 130 485 A1), l'élément de moule de pneumatique présentant au moins une texture particulière sur un flanc pour procurer un aspect amélioré. Un moule comprend principalement deux coquilles latérales assurant chacune le moulage d'un des flancs du pneumatique, et une couronne assurant le moulage de la bande de roulement. Les coquilles et la couronne définissent un espace intérieur de moulage toroïdal destiné à être mis en contact avec l'ébauche du pneumatique non vulcanisée.

De manière connue, la carcasse interne d'une ébauche de pneumatique est composée d'au moins une nappe carcasse de fils enrobés de caoutchouc. Lors d'une étape de fabrication de l'ébauche de pneumatique, cette nappe carcasse est coupée puis assemblée sur un tambour. Or, il est possible qu'au cours de sa mise en place, la fin de la nappe carcasse ne coïncide pas exactement avec le début de cette nappe sur le tambour, de sorte qu'il existe un surplus de nappe dans l'assemblage.

Cette superposition crée localement une surépaisseur sur l'ébauche crue du pneumatique. Une fois cette ébauche crue vulcanisée à l'intérieur du moule associé et le pneumatique en résultant gonflé, cette surépaisseur apparaît en creux au niveau du flanc du pneumatique.

Or, un tel creux est particulièrement visible sur le pneumatique, notamment sous certaines conditions d'éclairage. Ceci peut constituer un motif de non achat par un consommateur alors même que ce défaut n'impacte nullement le comportement du pneumatique et n'est donc pas préjudiciable à la sécurité.

Afin de masquer ce défaut sur le flanc du pneumatique, il est proposé, par la demande de brevet US 2008/0066846, de former un motif moiré sur le flanc du pneumatique, notamment dans la zone où se trouve la déformation vallonnement/creux créée par le chevauchement des extrémités de ou des nappes carcasses. Les motifs moirés décrits sont obtenus par superposition de groupes de courbes non identiques. Ces motifs moirés visent à créer des interférences lorsque la lumière est réfléchie par le flanc du pneumatique. Ainsi, les différences de réflexion de la lumière, qui existaient auparavant entre la zone de vallonnement/creux et le reste de la surface du flanc, ne sont plus visibles à l'œil nu.

Pour former de tels motifs sur le flanc du pneumatique, on réalise un négatif de ces motifs sur la surface de moulage de la coquille du moule du pneumatique. Ces négatifs de motifs peuvent par exemple être réalisés par usinage ou gravure au laser.

Pour réaliser ce type de gravure sur la coquille du moule, on utilise une source lumineuse laser dont la puissance est suffisante pour éroder le métal de la coquille sur une profondeur donnée. Le faisceau laser produit par la source est guidé jusque sur la surface de la coquille au moyen de fibres optiques et d'une série de miroirs statiques ou rotatifs et de lentilles de convergence.

Classiquement, pour réaliser des négatifs de motifs sur la coquille du moule, on divise la surface de moulage de la coquille à graver en une pluralité de zones élémentaires d'intervention du faisceau laser. Ces zones d'intervention se présentent généralement sous la forme de polygones adjacents et sont classiquement nommées « négatifs de patchs ».

Lors de la gravure, le faisceau laser balaye successivement chaque zone élémentaire d'intervention définie. Avec cette méthode de gravure, les bords de chaque zone élémentaire d'intervention du faisceau laser peuvent être visibles sur la coquille du moule, et par conséquence peuvent être visibles sur le flanc du pneumatique moulé.

Dans la demande de brevet EP-A1-3 047 932, il est décrit plusieurs solutions de gravure pour réduire le caractère visible des bords des zones d'intervention du faisceau laser sur une pièce gravée. Cependant, aucune des solutions proposées n'apporte entière satisfaction en ce qui concerne la gravure d'une coquille d'un moule de pneumatique.

La présente invention vise à remédier à cet inconvénient.

L'invention concerne un procédé de gravure au laser d'un élément de moule pour moule de pneumatique du type comprenant une bande de roulement et deux flancs délimitant la bande, tel que défini dans la revendication 1.

Le procédé comprend les étapes suivantes :
- a) définir un négatif de texture à graver sur au moins une partie d'une surface de moulage de l'élément de moule qui est composé d'une pluralité de motifs adjacents, le négatif de texture étant destiné à mouler sur un des flancs du pneumatique une texture faisant contraste par rapport au reste dudit flanc,
- b) diviser ladite partie de la surface de moulage de l'élément de moule en une pluralité de zones élémentaires d'intervention du laser qui sont adjacentes, la forme extérieure de chaque zone élémentaire d'intervention du faisceau laser étant définie de sorte que le pourtour de ladite zone coïncide avec le pourtour d'un motif du négatif de texture à graver ou avec le pourtour constitué de la réunion de plusieurs motifs juxtaposés dudit négatif de texture à graver, et
- c) réaliser par gravure au laser le ou les motifs du négatif de texture dans chaque zone élémentaire d'intervention dudit laser.

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une, appelée bande de roulement, est destinée à entrer en contact avec une chaussée lorsque le pneumatique roule. La bande de roulement comprend une pluralité de découpures se prolongeant sur au moins une des surfaces latérales. On entend par « matériau caoutchoutique », un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « flanc » d'un pneumatique, on entend une partie de la surface latérale du pneumatique disposée entre la bande de roulement du pneumatique et un bourrelet de ce pneumatique, débutant à partir des extrémités des découpures de la bande de roulement et se prolongeant jusqu'au bourrelet.

Par « surface de moulage » de l'élément de moule, on entend la surface délimitant en partie l'espace intérieur de moulage du moule.

On entend par « texture » sur un flanc, une partie de flanc qui présente des caractéristiques d'état de surface différentes du reste du flanc.

Par « motifs adjacents » du négatif de texture conformément à l'invention, on entend des motifs contigus qui comprennent au moins un bord commun. Par exemple, tout ou partie des motifs dudit négatif de texture peuvent être délimités chacun par au moins deux bords intérieur et extérieur et par au moins deux bords latéraux. Dans ce cas, pour un motif déterminé du négatif de texture, au moins un des bords de chaque motif adjacent audit motif déterminé est commun avec un des bords dudit motif déterminé.

Par « bords intérieur et extérieur », on entend les bords du motif en considérant une direction radiale, i.e. une direction perpendiculaire à l'axe du moule. Par « bords latéraux », on entend les bords du motif en considérant une direction circonférentielle, i.e. une direction tangente à un cercle dont le centre est sur l'axe du moule.

Conformément à l'invention, les bords de chaque zone élémentaire d'intervention du faisceau laser, qui délimitent le pourtour de ladite zone, se superposent avec les bords d'un ou plusieurs motifs du négatif de texture.

Le pourtour de chaque zone élémentaire d'intervention du faisceau laser coïncide avec le pourtour d'un des motifs du négatif de texture ou avec le pourtour formé par plusieurs motifs adjacents. Autrement dit, le pourtour de chaque zone élémentaire d'intervention du faisceau laser est masqué par le négatif de texture lui-même. Ainsi, après moulage du pneumatique, on améliore l'effet esthétique rendu par la texture du flanc. De plus, les petits défauts de raccordement qui pourraient exister entre chaque zone élémentaire d'intervention du faisceau laser sont masqués par le changement de texture entre motifs adjacents.

De préférence, le faisceau laser est commandé et dirigé pour graver entièrement le ou les motifs du négatif de texture d'une zone élémentaire d'intervention dudit faisceau laser avant de passer à la zone élémentaire d'intervention suivante.

Ainsi, on réduit le temps de gravure car le nombre de repositionnements du faisceau laser à effectuer est diminué. De même, la précision de repositionnement de la tête laser de la machine de gravure contenant les lentilles de convergence n'est pas aussi critique que lorsque la réalisation du ou des motifs du négatif de texture de la zone élémentaire d'intervention est faite de manière discontinue, avec des étapes de repositionnement de cette tête laser, lors du passage d'une zone élémentaire à l'autre. Comme l'opération de lasage du ou des motifs du négatif de texture de la zone élémentaire d'intervention est réalisée entièrement avant de passer à la zone élémentaire d'intervention suivante, la qualité de réalisation des éléments de texture constituant le ou les motifs en est améliorée. Ceci permet d'obtenir des textures moulées sur le pneumatique d'une grande qualité et ayant une luminance plus faible.

Les zones élémentaires d'intervention du faisceau laser peuvent être agencées selon un réseau de colonnes radiales et de bandes circonférentielles. Ainsi, les zones élémentaires d'une colonne sont alignées dans le sens radial, et les zones élémentaires d'une bande sont alignées dans le sens circonférentiel.

Dans un mode de mise en oeuvre avantageux, le laser est commandé et dirigé pour passer successivement dans les zones élémentaires d'intervention dudit faisceau laser d'une colonne qui sont disposées de manière immédiatement adjacente, puis pour passer successivement dans les zones élémentaires d'intervention de la colonne immédiatement adjacente, le passage d'une colonne à une colonne adjacente s'effectuant toujours dans le même sens de déplacement circonférentiel.

Ceci permet de réduire les écarts de repositionnement engendrés par les variations de température que peuvent subir les éléments mécaniques de maintien de la tête laser de la machine de gravure contenant les lentilles de convergence. En effet, des dilatations de ces éléments mécaniques sont observables par exemple après chargement dans la machine de gravure d'un nouvel élément de moule à graver, pendant la phase de démarrage du cycle de gravage.

Les formes extérieures des zones élémentaires d'intervention du faisceau laser peuvent être polygonales, notamment carrées et/ou rectangulaires et/ou hexagonales et/ou de parallélogramme.

Dans un mode de réalisation avantageux, tout ou partie des motifs du négatif de texture comprennent une pluralité d'éléments de texture agencés de sorte à former dans le motif une pluralité de rangées s'étendant selon une même direction d'extension. Pour un motif déterminé dudit négatif de texture, les rangées d'éléments de texture de chaque motif adjacent audit motif déterminé présentent une direction d'extension différente de la direction d'extension des rangées des éléments de texture dudit motif déterminé. Par « éléments de texture », on entend des éléments en protubérance ou en creux par rapport à la surface de moulage de l'élément de moule.

Ainsi, on obtient après moulage du pneumatique, pour un motif déterminé de la texture, des motifs adjacents audit motif qui présentent des luminosités différentes compte tenu de l'agencement des éléments de texture des motifs moulés et de l'orientation particulière des motifs les uns par rapport aux autres. L'écart de luminosité perçu, par un observateur, entre motifs adjacents varie avec les conditions d'éclairage dudit motif, ce qui contribue à masquer les défauts de déformations des flancs du pneumatique.

Par « luminosité » ou « luminance », on entend le paramètre qui caractérise une surface à réfléchir plus ou moins la lumière. La luminosité est exprimée selon une échelle allant de 0 à 100 selon le modèle colorimétrique L^{∗}a^{∗}b^{∗} établi par la CIE (Commission Internationale de l'Eclairage) en 1976. La valeur 100 représente le blanc ou la réflexion totale ; la valeur 0, le noir ou l'absorption totale.

Les déformations locales du flanc générées lors de la fabrication du pneumatique sont masquées de manière particulièrement efficace par la texture qui confère en outre un aspect haut de gamme au pneumatique. En outre, les coûts liés à la fabrication de cette texture sont limités dans la mesure où les éléments de texture des motifs du négatif de texture sont agencés sous forme de rangées.

De préférence, tout ou partie des éléments de texture de chaque motif du négatif de texture s'étendent linéairement dans ledit motif selon la direction d'extension des rangées dudit motif. Ceci permet de limiter encore les coûts liés à la fabrication du négatif de texture. Dans ce but, tout ou partie des éléments de texture de chaque motif du négatif de texture peuvent être la répétition d'un même élément de base.

Afin de limiter encore les coûts de fabrication du négatif de texture, tout ou partie des motifs dudit négatif peuvent être identiques et orientés les uns par rapport aux autres tel qu'indiqué précédemment.

Dans un mode de réalisation, la valeur de l'angle formé entre la direction d'extension des rangées d'éléments de texture dudit motif déterminé et entre la direction d'extension des rangées d'éléments de texture de chaque motif adjacent audit motif déterminé est supérieure ou égale à 45° en valeur absolue, par exemple supérieure à 60° en valeur absolue, et de préférence égale à 90° en valeur absolue. La valeur dudit angle peut être inférieure ou égale à 135° en valeur absolue.

Les motifs dudit négatif de texture peuvent avoir une forme extérieure polygonale, notamment carrée et/ou rectangulaire et/ou hexagonale et/ou de parallélogramme.

Avantageusement, la surface de tout ou partie des motifs du négatif de texture est comprise entre 5 mm² et 3 cm², et de préférence comprise entre 10 mm² et 50 mm².

Tout ou partie des éléments de texture des motifs du négatif de texture peuvent être en creux par rapport à la surface de moulage de l'élément de moule. Alternativement ou en combinaison, tout ou partie des éléments de texture de ces motifs peuvent être en saillie par rapport à ladite surface. Tout ou partie des éléments de texture en creux et/ou en protubérance peuvent présenter des formes et des distances variables en eux.

De préférence, les éléments de texture des motifs du négatif de texture ont des dimensions identiques, en hauteur ou profondeur et en largeur. Les éléments de texture des motifs dudit négatif de texture peuvent présenter une largeur moyenne comprise entre 0,02 mm et 0,35 mm, le pas entre lesdits éléments de texture d'un même motif pouvant être compris entre 0.05 mm et 0.5 mm.

De préférence, la texture moulée peut former globalement une surface annulaire sur ledit flanc du pneumatique.

La présente invention sera mieux comprise à la lecture de la description détaillée de modes de réalisation pris à titre d'exemples nullement limitatifs et illustrés par les dessins annexés sur lesquels :
- la figure 1 est une vue schématique en perspective d'une partie d'un pneumatique qui comprend une texture particulière formée sur un flanc du pneumatique selon un exemple de réalisation de l'invention,
- la figure 2 représente une partie de la texture du flanc du pneumatique de la figure 1,
- les figures 3 à 5 représentent une partie de la texture du flanc d'un pneumatique selon d'autres exemples de réalisation de l'invention,
- la figure 6 représente une partie de la texture du flanc du pneumatique de la figure 2 pourvu d'un marquage, et
- la figure 7 est un organigramme d'un procédé de gravure au laser du moule du pneumatique pour obtenir les textures des exemples de réalisation précédents.

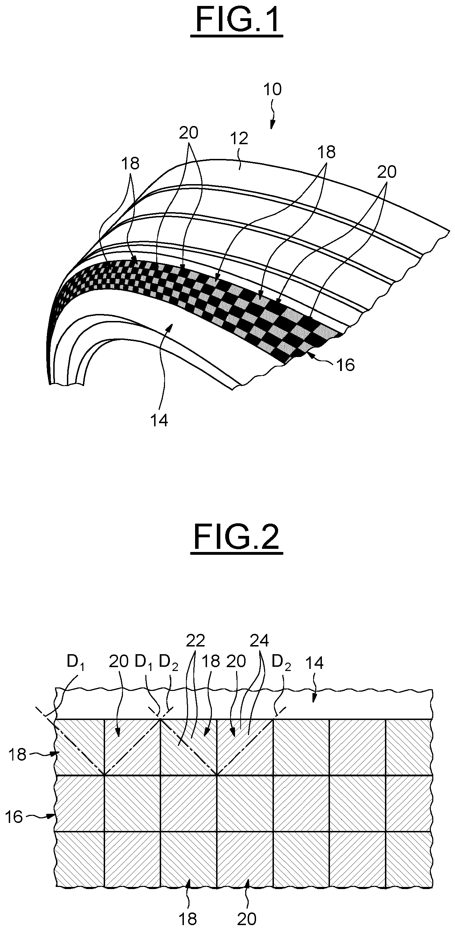

Sur la figure 1 est représenté schématiquement un pneumatique 10 comprenant une bande de roulement 12 et des flancs 14 latéraux entourant de part et d'autre la bande de roulement, un seul étant visible sur la figure. La bande de roulement 12 comprend une surface de roulement destinée à venir en contact avec une chaussée lors du roulage.

Le flanc 14 comprend une texture 16 qui est spécialement prévue pour masquer les déformations de ce flanc liées au chevauchement de nappe carcasse du pneumatique lors de la fabrication. Comme cela sera décrit plus en détail par la suite, la coquille du moule de fabrication associé est gravée de sorte que l'effet visuel de la texture 16 soit particulièrement esthétique.

La texture 16 du flanc peut s'étendre sur tout ou partie du flanc 14, et en particulier sur la partie comprenant les déformations. La texture 16 peut former une surface globalement annulaire en forme d'anneau sur le flanc 14. En variante, la texture 16 peut être discontinue dans le sens circonférentiel.

La texture 16 est composée d'une pluralité de motifs 18, 20 qui sont disposés adjacents les uns aux autres sur le flanc et qui présentent ici une forme extérieure identique. Dans l'exemple de réalisation illustré, les motifs 18, 20 présentent une forme extérieure carrée. La texture 16 est donc divisée en motifs 18, 20 de carrés égaux. La texture 16 présente ici une forme en damier.

La texture 16 est formée par une pluralité de bandes qui s'étendent chacune dans le sens circonférentiel et qui sont disposées de manière adjacente dans le sens radial. Chaque bande est composée d'une alternance de motifs 18, 20.

Comme illustré plus visiblement à la figure 2, chaque motif 18 comprend une pluralité de stries 22 parallèles entre elles et formées en creux sur la surface du flanc 14. Les stries 22 sont ainsi agencées pour former une pluralité de rangées parallèles s'étendant dans le motif 18 considéré selon une même direction d'extension D₁. Dans l'exemple de réalisation illustré, la direction d'extension D₁ forme un angle avec une direction radiale perpendiculaire à l'axe de rotation du pneumatique d'une valeur de 45° en valeur absolue. En variante, il est bien entendu possible de prévoir d'autres valeurs pour ledit angle.

De façon similaire aux motifs 18, chaque motif 20 comprend une pluralité de stries 24 parallèles entre elles et s'étendant selon une même direction d'extension D₂ qui est différente de la direction d'extension D₁. Dans l'exemple de réalisation illustré, la valeur de l'angle formé entre les directions d'extension D₁ et D₂ est égale à 90° en valeur absolue. Alternativement, il est possible de prévoir d'autres valeurs dudit angle, en restant toutefois de préférence dans une plage en valeur absolue comprise entre 45° et 90° afin d'optimiser la qualité de l'effet visuel produit par la texture 16.

Les stries 22, respectivement 24, s'étendent linéairement selon la direction d'extension D₁, respectivement D₂, dans le motif 18, respectivement 20. Les stries 22, 24 sont continues. Alternativement, les stries 22, 24 pourraient être discontinues.

Afin d'optimiser les propriétés de masquage des stries 22 et 24, le pas moyen de celles-ci est compris entre 0.05 et 0.5 mm. Le pas peut être constant ou variable. Dans ce but, la surface de chaque motif 18, 20 est comprise entre 5 mm² et 3 cm². Les stries 22, 24 ont une largeur moyenne comprise entre 0,02 mm et 0,35 mm à mi-profondeur. Les stries 22, 24 sont réparties dans le motif 18, 20 associé selon une densité au moins égale à une strie par mm², chaque strie ayant une section moyenne comprise entre 0.0005 mm² et 0.6 cm². La hauteur des stries est par exemple comprise entre 0,1 mm et 0,6 mm, préférentiellement comprise entre 0,2 mm et 0,4 mm.

Dans l'exemple de réalisation illustré, les motifs 18, 20 de la texture 16 sont identiques entre eux, seule l'orientation de ces motifs étant différente. Autrement dit, la texture 16 est composée par répétition d'un motif de base dont l'orientation varie. L'agencement des motifs 18, 20 est organisé de sorte que pour un motif 18, 20 donné, les rangées de stries 22, 24 de chaque motif adjacent à ce motif donné présentent une direction d'extension D₁, D₂ différente de la direction d'extension des rangées des éléments de texture dudit motif déterminé.

Comme indiqué précédemment, les motifs 18, 20 de la texture présentent ici une forme extérieure carrée. Sur l'exemple de réalisation illustré, en considérant une bande circonférentielle située dans une zone médiane de la texture 16, le côté latéral d'un motif 18 est commun avec le côté latéral du motif 20 qui le précède et le côté latéral opposé du motif 18 est commun avec le côté latéral du motif 20 qui le suit. De façon similaire, le côté intérieur d'un motif 18 est commun avec le côté extérieur du motif 20 qui est situé au-dessous et le côté extérieur du motif 18 est commun avec le côté intérieur du motif 20 qui est situé au-dessus.

Chaque motif 18, respectivement 20, de la texture 16 présente une luminosité dite première luminosité L^{∗}1, respectivement deuxième luminosité L^{∗}2. Le reste du flanc 14 non texturé présente une luminosité dite troisième luminosité L^{∗}3 supérieure d'au moins 5 unités, de préférence d'au moins 10 unités. Cela crée de fait un contraste entre la texture 16 et le reste du flanc 14 non texturé qui rend davantage visible la texture. Les première et deuxième luminosités L^{∗}1 et L^{∗}2 de chaque motif 18, 20 de la texture 16 peuvent par exemple être comprises entre 5 et 15. La valeur absolue des différences des luminosités L^{∗}1 et L^{∗}2 entre deux motifs 18, 20 adjacents est de préférence inférieure ou égale à 3.

L'appareil de mesure de la luminosité approprié est un spectro-colorimètre CM 700D de la marque KONICA-MINOLTA. Cet appareil est adapté pour mesurer :
- la luminosité L^{∗}1 à L^{∗}3 des zones du flanc 14,
- une composante a^{∗} qui définit une première nuance de couleur entre le rouge et le vert,
- une composante b^{∗} qui définit une deuxième nuance de couleur entre le jaune et le bleu.

On positionne l'appareil sur la partie du flanc 14 du pneumatique que l'on veut mesurer et qui donne ensuite les valeurs des trois paramètres L^{∗}, a^{∗}, b^{∗}. Ces mesures sont effectuées avec le mode « SCI » (Mode de réflexion spéculaire incluse) paramétré à un angle de 10° et un réglage de la lumière de type D65 (réglage défini selon la Commission Internationale de l'Eclairage, CIE). Grâce à cet appareil, on quantifie la luminosité de la texture 16 du flanc qui est ensuite comparée à la luminosité des parties du flanc 14 non texturées.

La figure 2 illustre un exemple non limitatif de l'orientation des stries 22, 24 des motifs de la texture. Alternativement, il est bien entendu possible de prévoir d'autres orientations pour ces stries.

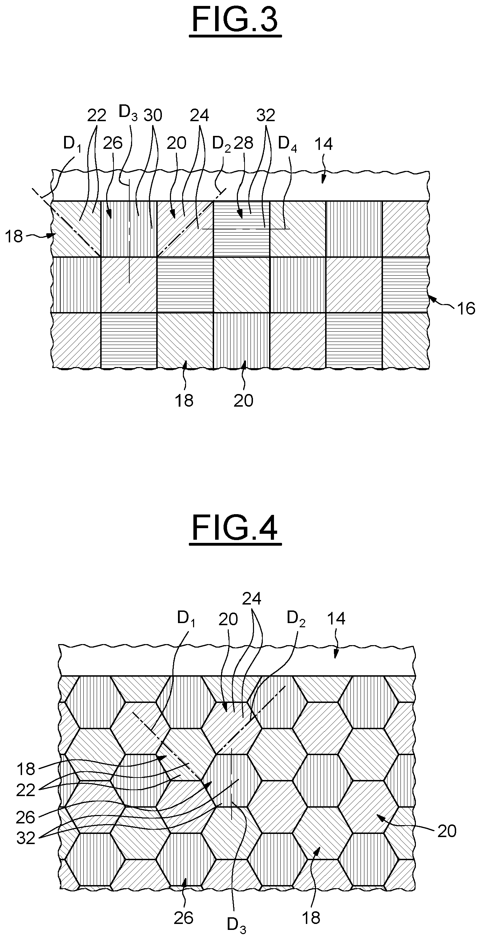

Par exemple, dans la variante de réalisation illustrée à la figure 3, sur laquelle les éléments identiques portent les mêmes références, la texture 16 est composée par la répétition du premier et du deuxième motifs 18, 20, et d'un troisième et quatrième motifs 26, 28 dont l'orientation ainsi que le pas des stries 30, 32 varient. Les stries 30, respectivement 32, sont parallèles entre elles et agencées pour former une pluralité de rangées s'étendant dans le motif considéré selon une direction d'extension D₃, respectivement D₄, d'extension différente des directions d'extension D₁ et D₂. La valeur de l'angle formé entre les directions d'extension D₁ et D₂ est ici égale à 90°, la valeur de l'angle formé entre les directions d'extension D₃ et D₄ est ici égale à 90°, et la valeur de l'angle formé entre les directions d'extension D₁, ou D₂, et D₃ ou D₄, est égale à 45°.

En variante, il est possible de prévoir des valeurs d'angle différentes en conservant toutefois un agencement des motifs 18, 20, 26 et 28 de sorte que pour un motif déterminé, les rangées de stries de chaque motif adjacent audit motif déterminé présentent une direction d'extension différente de celle des rangées de stries dudit motif déterminé.

Dans la variante illustrée à la figure 3, le pas entre les stries 30, 32 des motifs 26, 28 est réduit par rapport au pas des stries 22, 24 des motifs 18, 20. Alternativement, il est possible de prévoir un pas identique pour les stries 22, 24. Ainsi, il est possible de prévoir que la texture 16 soit composée par répétition d'un motif de base dont seule l'orientation des rangées de stries varie, et non le pas.

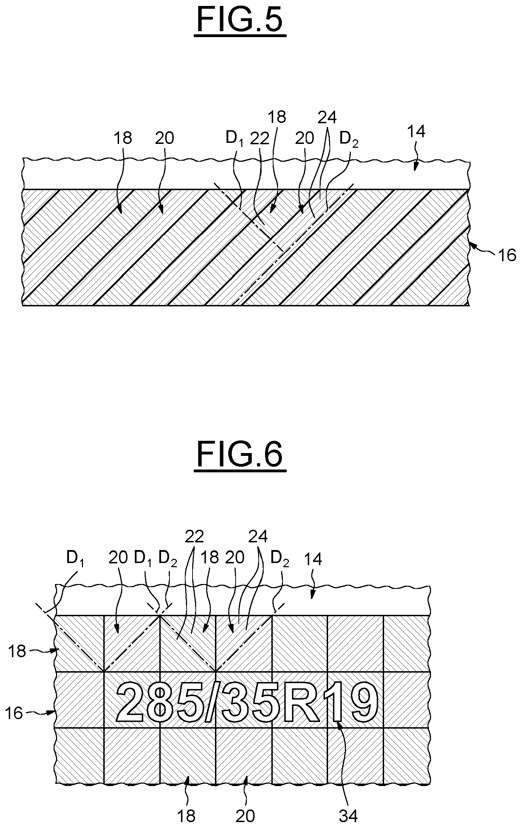

L'exemple de réalisation illustré à la figure 4, sur laquelle les éléments identiques portent les mêmes références, diffère des premiers exemples illustrés par la forme extérieure des motifs 18, 20 de la texture 16 qui est ici hexagonale. En variante, il est possible de prévoir d'autres formes, par exemple rectangulaire ou de parallélogramme comme illustré à la figure 5.

Selon diverses variantes de réalisation, il est également possible d'intégrer des marquages dans la texture 16 du flanc du pneumatique. Par exemple, dans l'exemple de réalisation illustré à la figure 6, sur laquelle les éléments identiques portent les mêmes références, le flanc du pneumatique comprend un marquage 34 dans la zone de la texture 16. Le marquage 34 peut se présenter sous la forme d'une surface lisse. Le marquage 34 comprend ici des informations techniques du pneumatique. Il est possible de prévoir tout autre type de marquage, par exemple des informations légales ou distinctives de la marque du pneumatique ou encore des codes à barres pour identification de stock, un numéro de série individuel dudit pneumatique, etc.

Le marquage 34 a de préférence une luminosité supérieure à celle des motifs 18 et 20, qui peut par exemple être comprise entre 20 et 30. Cet écart de luminosité permet de rendre le marquage 34 bien visible. Le marquage 34 est préférentiellement encastré dans la texture 16, ou affleure avec celle-ci.

Dans les exemples de réalisation illustrés, pour chaque motif de la texture 16 du flanc du pneumatique, les stries sont agencées sous forme de rangées et s'étendent linéairement de façon continue selon la direction d'extension de ces rangées. En variante, il est possible de prévoir que tout ou partie des rangées sont formées chacune par une succession de stries s'étendant selon la direction d'extension et espacées les unes par rapport aux autres de façon régulière ou irrégulière.

Dans les exemples de réalisation illustrés, la texture 16 s'étend sur tout ou partie du flanc et divisée en plusieurs motifs qui comprennent des éléments de texture réalisés sous forme de stries. Alternativement, les éléments de texture des motifs peuvent comprendre d'autres types d'éléments de texture en creux par exemple des cavités, qui peuvent présenter une forme circulaire, cylindrique, polygonale, etc., et qui sont agencées sous formes de rangées parallèles s'étendant selon la même direction d'extension pour un motif considéré.

Selon d'autres modes de réalisation, il est encore possible de prévoir des motifs comprenant des éléments de texture en saillie à partir du flanc du pneumatique, par exemple des lames, des brins, des protubérances de section parallélépipédique, polygonale, etc. Dans ce cas, la hauteur moyenne de ces éléments en saillie peut être comprise entre 0.1 mm et 0.6 mm.

Dans les exemples de réalisation illustrés, la texture 16 est composée d'une pluralité de motifs adjacents et identiques entre eux. En variante, il est possible de prévoir une texture divisée en une pluralité de motifs adjacents mais présentant des formes différentes.

Avec la texture 16 proposée, les déformations locales du flanc dues à la conformation du pneumatique sont masquées de manière particulièrement efficace. En outre, l'agencement des éléments de texture des motifs combiné à l'orientation particulière des motifs les uns par rapport aux autres permet d'obtenir au sein même de la texture des motifs présentant des luminosités différentes. Le contraste obtenu au sein de la texture produit un effet visuel notable sur la finition du pneumatique. En variante, il reste cependant possible de prévoir d'autres orientations des éléments de texture au sein d'un même motif et/ou d'autres orientations des éléments de texture d'un motif par rapport à ceux des autres motifs adjacents.

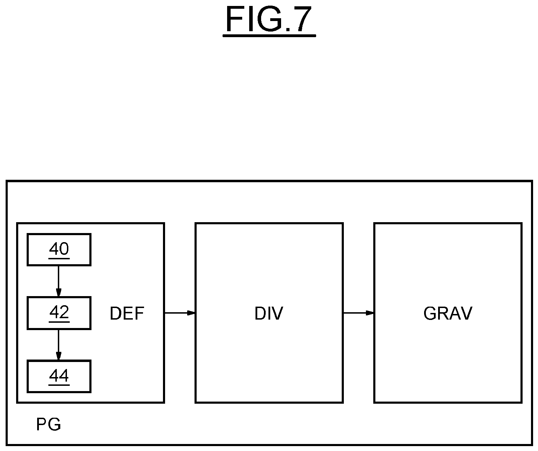

L'obtention de la texture 16 du pneumatique se fait par moulage à l'intérieur du moule de fabrication sur lequel a été gravé au laser au préalable le négatif de texture au moyen d'un procédé de gravure PG illustré à la figure 7. Le négatif de texture est gravé sur l'une des coquilles du moule.

Tel qu'illustré à la figure 7, le procédé de gravure PG comprend :
- la définition du négatif de texture à graver sur la surface de moulage de la coquille (étape illustrée DEF),
- la division de la surface de moulage à graver de la coquille en une pluralité de zones élémentaires d'intervention du faisceau laser (étape illustrée DIV), et
- la réalisation de la gravure au laser (étape illustrée GRAV).

Les étapes du procédé de gravure PG vont être décrites plus en détail ci-après en référence à l'exemple de texture 16 du flanc du pneumatique qui est illustré aux figures 1 et 2.

L'étape de définition du négatif de texture à graver sur la surface de moulage de la coquille permet de sélectionner les différents paramètres dudit négatif comme paramètres d'entrée de la machine de gravure laser. La sélection des paramètres est effectuée selon la texture 16 à mouler sur le flanc du pneumatique.

Dans une première sous-étape référencée 40, on sélectionne la ou les formes extérieures des motifs du négatif de texture à graver. En considérant la texture 16 du flanc du pneumatique illustrée aux figures 1 et 2, la forme extérieure des motifs choisie est commune à l'ensemble et est carrée.

Dans une deuxième sous-étape référencée 42, on sélectionne pour chaque motif du négatif de texture le type d'élément de texture à graver, ici des lamelles en saillie permettant l'obtention des stries 22 ou 24 des motifs de la texture. Dans une troisième sous-étape référencée 44, on sélectionne les caractéristiques des éléments de texture choisis lors de cette deuxième sous-étape, à savoir la direction d'extension, le pas, la largeur, la hauteur, etc. Ici, pour un motif donné du négatif de texture, les lamelles sont choisies de sorte à s'étendre selon la direction d'extension D₁ ou D₂, et à présenter des pas, des largeurs et des hauteurs respectivement égales entre elles.

Les paramètres du négatif de texture sont choisis parmi une liste de paramètres préenregistrés à l'intérieur d'un logiciel programmé qui est chargé dans une unité de traitement de la machine de gravure laser. La réalisation du négatif de texture qui est composé d'une pluralité de motifs adjacents est préenregistrée à l'intérieur du logiciel de la machine de gravure laser.

L'étape de division DIV de la surface de moulage à graver de la coquille est réalisée après la première étape de définition du négatif de texture DEF. Lors de cette deuxième étape, la surface de moulage à graver de la coquille est divisée en une pluralité de zones élémentaires d'intervention du faisceau laser qui sont adjacentes. Ces zones élémentaires d'intervention peuvent présenter une forme extérieure identique ou être de formes différentes.

Cette étape de division en zones élémentaires d'intervention adjacentes du laser est réalisée virtuellement par le logiciel de la machine de gravure laser à l'intérieur duquel a été enregistrée au préalable la forme tridimensionnelle réelle de la surface de moulage à graver de la coquille.

Le logiciel calcule et définit la forme extérieure, ou les formes extérieures, des zones d'intervention du laser en fonction de la ou des formes des motifs du négatif de texture à graver qui ont été définies à la première étape du procédé.

Dans un premier mode de mise oeuvre, le logiciel définit la ou les formes extérieures des zones élémentaires d'intervention du faisceau laser de sorte que le pourtour de chacune de ces zones d'intervention coïncide avec le pourtour d'un motif du négatif de texture à graver. En l'espèce, en vue de la réalisation de la texture 16, le logiciel définit une forme extérieure carrée dans ce mode de mise en œuvre.

Dans un deuxième mode de mise œuvre, le logiciel définit la ou les formes extérieures des zones élémentaires d'intervention du faisceau laser de sorte que le pourtour de chacune de ces zones d'intervention coïncide avec le pourtour constitué de la réunion de plusieurs motifs juxtaposés dudit négatif de texture à graver.

Dans un troisième mode de mise oeuvre, le logiciel peut définir des formes extérieures des zones élémentaires d'intervention du faisceau laser de sorte que le pourtour de certaines de ces zones d'intervention coïncide avec le pourtour d'un motif du négatif de texture à graver, et que le pourtour des autres zones d'intervention coïncide avec le pourtour constitué de la réunion de plusieurs motifs juxtaposés dudit négatif de texture à graver.

L'étape de réalisation de la gravure GRAV du négatif de texture sur la surface de moulage de la coquille du moule s'effectue par une source lumineuse laser de la machine de gravure dont la puissance est suffisante pour liquéfier et sublimer le métal de la coquille du moule. A titre indicatif, la source lumineuse laser peut être pulsée d'une puissance de 50W et fonctionner à une fréquence de 50 ou 100 KHz. Bien entendu, la fréquence des impulsions ainsi que la puissance peuvent être adaptées pour moduler la quantité d'énergie transmise à la surface de la coquille du moule à chaque impulsion.

Le logiciel pilote la machine de gravure pour appliquer le faisceau laser dans chacune des zones élémentaires d'intervention définies dans la seconde étape. Le faisceau laser est appliqué sur la surface de moulage de la coquille dans chaque zone élémentaire d'intervention par passes successives, chacune des passes ayant pour effet d'éroder le métal sur une surface et une profondeur données. Alternativement, selon la dimension des zones élémentaires d'intervention, il peut être envisageable de ne faire qu'une seule passe par zone élémentaire.

Dans un mode de mise en oeuvre non limitatif, le logiciel commande et dirige le faisceau laser pour graver entièrement le ou les motifs du négatif de texture d'une zone élémentaire d'intervention dudit faisceau laser avant de passer à la zone élémentaire d'intervention suivante. Cela permet notamment de réduire le temps de gravure du négatif de texture sur la surface de la coquille du moule.

Dans un mode de mise en oeuvre non limitatif, lors de l'étape de division de la surface de moulage, le logiciel définit la ou les formes extérieures des zones élémentaires d'intervention du faisceau laser de sorte à agencer ces zones selon un réseau de colonnes radiales et de bandes circonférentielles. Lors de la gravure, le logiciel commande et dirige le faisceau laser pour passer successivement dans les zones élémentaires d'intervention d'une colonne, puis pour passer successivement dans les zones élémentaires d'intervention de la colonne immédiatement adjacente, le passage d'une colonne à une colonne adjacente s'effectuant toujours dans le même sens de déplacement circonférentiel.

Conformément à l'invention, les bords des zones élémentaires d'intervention du faisceau laser se superposent avec les bords des motifs du négatif de texture. Les éventuels défauts de raccordement qui pourraient exister entre les zones élémentaires d'intervention du faisceau laser sont masqués par les bords des motifs du négatif de texture.

Le procédé permet ainsi d'améliorer le caractère esthétique de l'effet visuel rendu par la texture sur le flanc du pneumatique. Le procédé permet d'obtenir sur le flanc du pneumatique une texture de grande qualité en utilisant des techniques industrielles existantes pour diviser la surface de moulage à graver en zones élémentaires d'intervention du faisceau laser et pour graver cette surface. Le coût de gravure n'est donc pas augmenté.

## Revendications

1. Procédé de gravure au laser d'un élément de moule pour moule de pneumatique du type comprenant une bande de roulement et deux flancs délimitant la bande, le procédé comprenant les étapes suivantes :
- a) définir un négatif de texture à graver sur au moins une partie d'une surface de moulage de l'élément de moule qui est composé d'une pluralité de motifs de forme extérieure polygonale, lesdits motifs étant délimités chacun par des bords adjacents, où les motifs adjacents du négatif de texture sont des motifs contigus qui comprennent au moins un bord commun, avec le négatif de texture étant destiné à mouler sur un des flancs du pneumatique une texture faisant contraste par rapport au reste dudit flanc,
et **caractérisé par** :
- b) diviser ladite partie de la surface de moulage de l'élément de moule en une pluralité de zones élémentaires d'intervention du faisceau laser qui sont adjacentes, la forme extérieure de chaque zone élémentaire d'intervention du faisceau laser étant définie de sorte que le pourtour de ladite zone coïncide avec le pourtour d'un motif du négatif de texture à graver ou avec le pourtour constitué de la réunion de plusieurs motifs juxtaposés dudit négatif de texture à graver, et
- c) réaliser par gravure au laser les motifs du négatif de texture de sorte que les bords de chaque zone élémentaire d'intervention du faisceau laser, qui délimitent le pourtour de ladite zone, se superposent avec les bords d'un motif ou de plusieurs motifs juxtaposés du négatif de texture gravé.

2. Procédé selon la revendication 1, dans lequel le faisceau laser est commandé et dirigé pour graver entièrement le ou les motifs du négatif de texture d'une zone élémentaire d'intervention dudit faisceau laser avant de passer à la zone élémentaire d'intervention suivante.

3. Procédé selon la revendication 1 ou 2, dans lequel les zones élémentaires d'intervention du faisceau laser sont agencées selon un réseau de colonnes radiales et de bandes circonférentielles.

4. Procédé selon la revendication 3, dans lequel le faisceau laser est commandé et dirigé pour passer successivement dans les zones élémentaires d'intervention d'une colonne qui sont disposées de manière immédiatement adjacente, puis pour passer successivement dans les zones élémentaires d'intervention de la colonne immédiatement adjacente, le passage d'une colonne à une colonne adjacente s'effectuant toujours dans le même sens de déplacement circonférentiel.

5. Procédé selon l'une quelconque des revendications précédentes, dans lequel les formes extérieures des zones élémentaires d'intervention du faisceau laser sont polygonales, notamment carrées et/ou rectangulaires et/ou hexagonales et/ou de parallélogramme.

6. Procédé selon l'une quelconque des revendications précédentes, dans lequel tout ou partie des motifs du négatif de texture comprennent une pluralité d'éléments de texture agencés de sorte à former dans le motif une pluralité de rangées s'étendant selon une même direction d'extension, et dans lequel pour un motif déterminé dudit négatif de texture, les rangées d'éléments de texture de chaque motif adjacent audit motif déterminé présentent une direction d'extension différente de la direction d'extension des rangées des éléments de texture dudit motif déterminé.

7. Procédé selon la revendication 6, dans lequel tout ou partie des éléments de texture de chaque motif du négatif de texture s'étendent linéairement dans ledit motif selon la direction d'extension des rangées dudit motif.

8. Procédé selon la revendication 6 ou 7, dans lequel tout ou partie des éléments de texture de chaque motif du négatif de texture sont la répétition d'un même élément de base.

9. Procédé selon l'une quelconque des revendications 6 à 8, dans lequel les motifs du négatif de texture sont identiques entre eux.

## Patentansprüche

1. Verfahren zum Lasergravieren eines Formelements für eine Reifenform von dem Typ, der einen Laufstreifen und zwei Flanken, die den Streifen begrenzen, umfasst, wobei das Verfahren die folgenden Schritte umfasst:
- a) Definieren eines zu gravierenden Texturnegativs auf wenigstens einem Abschnitt einer Formungsfläche des Formelements, das von einer Mehrzahl von Motiven polygonaler Außenform gebildet ist, wobei die Motive jeweils von benachbarten Rändern begrenzt sind, wobei die benachbarten Motive des Texturnegativs aneinandergrenzende Motive sind, die mindestens einen gemeinsamen Rand umfassen, wobei das Texturnegativ dazu bestimmt ist, auf eine der Flanken des Reifens eine Textur zu formen, die einen Kontrast zum Rest der Flanke bildet,
und **gekennzeichnet durch**:
- b) Aufteilen des Abschnitts der Formungsfläche des Formelements in eine Mehrzahl von Elementar-Wirkbereichen des Laserbündels, die benachbart sind, wobei die Außenform jedes Elementar-Wirkbereichs des Laserbündels so festgelegt ist, dass der Umfang des Bereichs mit dem Umfang eines Motivs des zu gravierenden Texturnegativs oder mit dem Umfang, der von der Zusammenführung mehrerer nebeneinander liegender Motive des zu gravierenden Texturnegativs gebildet ist, zusammenfällt, und
- c) Erstellen der Motive des Texturnegativs durch Lasergravieren, so dass sich die Ränder jedes Elementar-Wirkbereichs des Laserbündels, die den Umfang des Bereichs begrenzen, mit den Rändern eines Motivs oder mehrerer nebeneinander liegender Motive des gravierten Texturnegativs überlagern.

2. Verfahren nach Anspruch 1, wobei das Laserbündel gesteuert und gelenkt wird, um das oder die Motive des Texturnegativs eines Elementar-Wirkbereichs des Laserbündels vollständig zu gravieren, bevor es zum nächsten Elementar-Wirkbereich übergeht.

3. Verfahren nach Anspruch 1 oder 2, wobei die Elementar-Wirkbereiche des Laserbündels gemäß einem Netz aus radialen Spalten und umlaufenden Streifen angeordnet sind.

4. Verfahren nach Anspruch 3, wobei das Laserbündel gesteuert und gelenkt wird, um die Elementar-Wirkbereiche einer Spalte nacheinander zu durchlaufen, die unmittelbar benachbart angeordnet sind, um dann nacheinander die Elementar-Wirkbereiche der unmittelbar benachbarten Spalte zu durchlaufen, wobei der Übergang von einer Spalte zu einer benachbarten Spalte immer in derselben Umfangsbewegungsrichtung erfolgt.

5. Verfahren nach einem der vorhergehenden Ansprüche, wobei die Außenformen der Elementar-Wirkbereiche des Laserbündels polygonal sind, insbesondere quadratisch und/oder quaderförmig und/oder hexagonal und/oder parallelogrammförmig.

6. Verfahren nach einem der vorhergehenden Ansprüche, wobei alle oder einige der Motive des Texturnegativs eine Mehrzahl von Texturelementen umfassen, die so angeordnet sind, dass sie im Motiv eine Mehrzahl von Reihen zu bilden, die sich in einer selben Erstreckungsrichtung erstrecken, und wobei für ein bestimmtes Motiv des Texturnegativs die Reihen von Texturelementen jedes Motivs, das dem bestimmten Motiv benachbart ist, eine Erstreckungsrichtung aufweisen, die sich von der Erstreckungsrichtung der Reihen der Texturelemente des bestimmten Motivs unterscheiden.

7. Verfahren nach Anspruch 6, wobei sich alle oder einige der Texturelemente jedes Motivs des Texturnegativs in dem Motiv in der Erstreckungsrichtung der Reihen des Motivs linear erstrecken.

8. Verfahren nach Anspruch 6 oder 7, wobei alle oder einige der Texturelemente jedes Motivs des Texturnegativs die Wiederholung eines selben Grundelements sind.

9. Verfahren nach einem der Ansprüche 6 bis 8, wobei die Motive des Texturnegativs zueinander identisch sind.

## Claims

1. Method for the laser engraving of a mould element for a mould for a tyre of the type comprising a tread and two sidewalls delimiting the tread, the method comprising the following steps of:
- a) defining a texture negative to be engraved on at least a part of a moulding surface of the mould element, which is made up of a plurality of patterns having an external polygonal shape, said patterns being each delimited by adjacent edges, where adjacent patterns of the texture negative are contiguous pattern that comprise at least one common edge, with the texture negative being intended to mould, on one of the sidewalls of the tyre, a texture that contrasts with the rest of said sidewall, and **characterised by** :
- b) dividing said part of the moulding surface of the mould element into a plurality of adjacent elementary areas of action of the laser beam, the external shape of each elementary area of action of the laser beam being defined such that the perimeter of said area coincides with the perimeter of a pattern of the texture negative to be engraved or with the perimeter made up of the meeting of several juxtaposed patterns of said texture negative to be engraved, and
- c) producing, by laser engraving, the patterns of the texture negative in a manner that the edges of each elementary area of action of the laser beam, which delimit the perimeter of said area, are superposed with the edges of one or more patterns of the engraved texture negative.

2. Method according to Claim 1, wherein the laser beam is controlled and directed to engrave all of the pattern(s) of the texture negative in an elementary area of action of said laser beam before moving on to the next elementary area of action.

3. Method according to Claim 1 or 2, wherein the elementary areas of action of the laser beam are arranged in a network of radial columns and circumferential strips.

4. Method according to Claim 3, wherein the laser beam is controlled and directed to move successively through the elementary areas of action of a column that are disposed immediately adjacently, then to move successively through the elementary areas of action of the immediately adjacent column, the movement from one column to an adjacent column always taking place in the same direction of circumferential movement.

5. Method according to any one of the preceding claims, wherein the external shapes of the elementary areas of action of the laser beam are polygonal, notably square and/or rectangular and/or hexagonal and/or parallelogram-shaped.

6. Method according to any one of the preceding claims, wherein all or some of the patterns of the texture negative comprise a plurality of texture elements arranged so as to form in the pattern a plurality of rows extending in one and the same direction of extension, and wherein, for a given pattern of said texture negative, the rows of texture elements of each pattern adjacent to said given pattern exhibit a direction of extension that is different from the direction of extension of the rows of texture elements of said given pattern.

7. Method according to Claim 6, wherein all or some of the texture elements of each pattern of the texture negative extend linearly in said pattern in the direction of extension of the rows of said pattern.

8. Method according to Claim 6 or 7, wherein all or some of the texture elements of each pattern of the texture negative are the repetition of one and the same base element.

9. Method according to any one of Claims 6 to 8, wherein the patterns of the texture negative are mutually identical.
